# EUROPÄISCHE PATENTSCHRIFT

(11) **EP 1 598 321 B1**
(45) Veröffentlichungstag und Bekanntmachung des Hinweises auf die Patenterteilung: **23.01.2008**
(21) Anmeldenummer: 05009415.0
(22) Anmeldetag: 29.04.2005
(51) Int. Cl.: C03B 7/10, C03B 7/14, C03B 7/086

(54) **Verfahren und Vorrichtung zur Erzeugung unterschiedlicher Glastropfenmassen bei der Herstellung von Glasgegenständen**
Procedure and device for the production of divergent glass gob masses with the production of glass articles
Procédure et dispositif pour la production des masses divergentes des paraisons en verre avec la production des articles de verre

(30) Priorität: 04.05.2004 DE 102004022218
(43) Veröffentlichungstag der Anmeldung: 23.11.2005
(73) Patentinhaber: Heye International GmbH, 31683 Obernkirchen (DE)
(72) Erfinder: Haase, Matthias, 31683 Obernkirchen (DE)
(74) Vertreter: Callies, Rainer Michael

(56) Entgegenhaltungen:
- EP-A1- 1 266 869
- EP-A2- 0 668 248
- DE-C- 532 439
- US-A- 1 732 771
- US-A- 3 333 937
- US-A- 4 544 397
- US-A- 4 708 729

## Beschreibung

Die Erfindung bezieht sich auf ein Verfahren zur Erzeugung unterschiedlicher Glastropfenmassen bei der Herstellung von Glasgegenständen mittels einer 1.S. (Indiviudal-Section)-Glasformmaschine. Die Glasgegenstände sind zur Herstellung eines Sortiments einer Anzahl von unterschiedlich schweren Glasgegenständen vorgesehen. Bei dem Verfahren strömt schmelzflüssiges Glas aus mindestens einem Tropfenauslass eines Speiserkopfes eines Speisers und eine zyklisch betätigte Schere trennt die Tropfen ab. Dabei wird die Masse von aufeinander folgenden Tropfen verändert, indem der Zeitabstand von Scherenschnitt zu Scherenschnitt variiert wird. Ferner bezieht sich die Erfindung auf Vorrichtungen nach dem Oberbegriff des Anspruchs 11.

Ein Speiser mit variablem Tropfengewicht für Behälterglas ist aus der Praxis bekannt ("Elektronischer Feeder Typ TSE" der Firma J. Walter Co. Maschinen GmbH, 96352 Wilhelmsthal, Deutschland). Bei diesem für die Herstellung eines Sortiments von Hohlglasbehältern geeigneten Speiser können aufeinander folgend vier verschiedene Tropfengewichte erzeugt werden. Es sind z.B. zwei Plunger im Speiserkopf vorgesehen. Ein programmierbares Plunger-Bewegungsprofil kann durch Veränderung von Stützpunkten von einem Bediener über eine graphische Bedienoberfläche manuell modifiziert werden. Ebenso kann die Hublage eines Plungers verändert werden. Eine manuelle Einstellung unterschiedlicher, aufeinander folgender Bewegungsprofile des Plungers mit dem Ziel, eine bestimmte Sequenz von unterschiedlichen Tropfengewichten zu erhalten, ist jedoch aufgrund der Komplexität dabei eingehender Parameter sehr schwierig.

Ein anfangs genanntes Verfahren bzw. eine gattungsgemäße Vorrichtung sind in der US 2003/0172675 A1 beschrieben. Dabei werden ein Plunger und eine zugehörige Schneidvorrichtung individuell gesteuert, um Tropfen unterschiedlicher Größe gleichzeitig zu erzeugen. Eine Steuerungseinheit berechnet in einer nicht näher beschriebenen Art ein Zeitfenster, in weichem ein Schnitt der Schneidvorrichtung möglich ist. Es ist vorgesehen, die Speisung einer Formgebungseinheit zu verzögern, wenn ein Tropfen nicht rechtzeitig erzeugt werden kann. Es wird zudem explizit erwähnt, dass es sein kann, dass innerhalb eines Maschinenzyklus Schnitte nicht verarbeitet werden können, sondern die Tropfen in einen Ausschussbehälter geführt werden. Somit ist der Zeitabschnitt, innerhalb dessen alle Tropfen für einen Maschinenzyklus erzeugt werden, schwankend. Eine konstante Schnittfolge und somit ein homogener, regelungstechnisch erfassbarer Produktionsbetrieb erscheint auf diese Weise nicht möglich.

Ferner sind aus der GB 274 370 A bzw. der DE 532 439 C ein Verfahren und eine Vorrichtung zur Herstellung eines Sortiments unterschiedlich schwerer Glasgegenstände bekannt. Die zeitliche Veränderung der Betätigung einer Schere kann durch eine mechanische Einstellung von Fingern und Hebeln, die mittels eines Nockenantriebs bewegt werden, bewirkt werden.

Auch in der US 4 544 397 A und in der US 3 333 937 A ist beschrieben, die Betätigung einer Schere zeitlich zu verändern, um unterschiedlich große Glastropfen zur Herstellung von Glasgegenständen zu erzeugen.

Ferner ist bekannt (z.B. aus: Sonderdruck aus "Siemens-Zeitschrift", 51. Jahrgang, Heft 9, September 1977, S. 767-769) zur Gewährleistung eines konstanten Artikelgewichts eine Regeleinrichtung vorzusehen, mit der abhängig von dem Gewicht bzw. der Masse des geformten Artikels die axiale Position eines Tubus des Speiserkopfes verändert wird. Dabei kann das Artikelgewicht beispielsweise durch Wiegen bestimmt werden. Alternativ kann das Artikelgewicht auch über die Messung der Eindringtiefe eines Pressstempels beim Press-Blas-Verfahren geregelt werden (EP 0 652 854 B1). Durch Veränderung der axialen Position des Tubus wird die Höhe des Glasstandes im Inneren des Tubus und somit das pro Feederzyklus bzw. Zeiteinheit austretende Glasvolumen beeinflusst. Auf diese Weise können Störeinflüsse, wie z.B. eine Änderung der Glasviskosität oder des Höhenstandes der Glasschmelze, kompensiert werden. Solch ein Tubus-Regelkreis ist wegen des großen Innenvolumens des Tubus relativ träge, so dass er sich nicht als Basis für eine Erzeugung unterschiedlicher Glastropfenmassen bei der Herstellung eines Sortiments von verschieden schweren Glasgegenständen eignet.

Auch aus der US 4 708 729 A ist bekannt, bei der Herstellung von Glasgegenständen eine konstante Tropfenmasse dadurch zu gewährleisten, dass eine Regelung des Tropfengewichts durch eine axiale Verstellung eines Tubus vorgenommen wird. In die Regelung, bei der auch eine Veränderung der Plungerbewegung und der Scherenbetätigung stattfindet, gehen die Temperatur, die Viskosität und der Stand des Glases im Speiserkopf ein.

Der Erfindung liegt die Aufgabe zugrunde, ein anfangs genanntes Verfahren zur Erzeugung unterschiedlicher Glastropfenmassen zur Verfügung zu stellen, das relativ einfach ist. Ferner liegt der Erfindung die Aufgabe zugrunde, eine zur Durchführung dieses Verfahrens geeignete gattungsgemäße Vorrichtung vorzusehen.

Die Aufgabe bezüglich des Verfahrens wird durch die Merkmale des Anspruchs 1 gelöst. Bei den herzustellenden Glasgegenständen kann es sich insbesondere um Hohlglasbehälter handeln. In einem Speiserkopf eines Speisers ist mindestens ein Tropfenauslass angeordnet. Unterhalb des Tropfenauslasses bzw. der Tropfenauslässe ist eine Schere zum Abtrennen der Tropfen von einem oder mehreren Strängen aus schmelzflüssigem Glas vorgesehen. Es können zum Beispiel auch zwei Scherblattpaare vorgesehen sein, die gemeinsam an einem Paar von Scherenarmen befestigt sind. Die mindestens eine Schere wird zyklisch betätigt, um aufeinander folgende Tropfen zu erzeugen, die der I.S.-Glasformmaschine zugeführt werden. Dadurch, dass der Zeitabstand zwischen zwei aufeinander folgenden Scherenschnitten über eine Sequenz von einer bestimmten Anzahl von Schnitten unterschiedlich ist, ist entsprechend die Masse der durch die einzelnen Scherenschnitte erzeugten Tropfen ebenfalls unterschiedlich. Je mehr Zeit bis zum nächsten Scherenschnitt vergeht, desto größer wird der dabei abgetrennte Tropfen ausfallen. Der Zeitabstand zwischen zwei aufeinander folgenden Scherenschnitten wird im Folgenden auch als Scherenzyklus bezeichnet. Es ist vorgesehen, ein Sortiment in Form einer bestimmten Anzahl von unterschiedlich schweren Glasgegenständen herzustellen. Zur Erzeugung der dafür benötigten Anzahl von Tropfen durch den Speiserkopf ist ein bestimmter Zeitabschnitt vorgegeben. Dieser Zeitabschnitt wird in Abhängigkeit von dem Verhältnis der gewünschten Tropfenmassen in unterschiedliche Zeitabstände von Scherenschnitt zu Scherenschnitt unterteilt.

Es wird eine Regelung der Tropfenmassen vorgenommen. Dies geschieht dadurch, dass ein Massenbezugs-Istwert mit einem Massenbezugs-Sollwert verglichen wird. Eine Differenz zwischen dem Istwert und dem Sollwert wird dadurch minimiert, dass die Scherenschnitt-Zeitabstände angepasst werden. Die Annäherung des Istwertes an den Sollwert geschieht vorzugsweise schrittweise. Bei der Regelung der Tropfenmassen kann der Einfachheit halber zu Beginn einer Einstellung der Verfahrensparameter von einem linearen Zusammenhang zwischen den Scherenschnitt-Zeitabständen und den erzeugten Tropfenmassen ausgegangen werden, wobei dann eine entsprechende Korrektur durch die Regelung erfolgt. Selbstverständlich können für künftige Verfahrensabläufe die Daten eines eingeschwungenen Systems als Basis verwendet werden.

Die Istwerte werden vorzugsweise automatisch von entsprechenden Erfassungssystemen oder aber auch manuell erfasst. Neben dem unmittelbaren Wert der Masse können auch andere Größen, die mit der Masse in direkter Beziehung stehen, ermittelt werden, wie z.B. die Eindringtiefe eines Pressstempels in ein Formwerkzeug beim Press-Blas-Verfahren. Je größer die maximale Eindringtiefe des Pressstempels ist, desto geringer ist die in eine Vorform gelangte Tropfenmasse.

Innerhalb der Regelung der Tropfenmassen wird auch eine axiale Verstellung des Tubus, der auch als Drosselrohr bezeichnet wird, vorgenommen. Wird ein Scherenschnitt-Zeitabstand verändert, hat dies immer Rückwirkungen auf die restlichen Scherenschnitt-Zeitabstände, da die zur Verfügung stehende Gesamtdauer, innerhalb der sich die Zeitpunkte der Scherenschnitte verschieben, konstant ist. Durch die Einbeziehung der axialen Verstellung des Tubus in die Regelung kann dieser Rückwirkung begegnet werden.

Um für alle innerhalb des vorgegebenen Zeitabschnitts zu erzeugenden Tropfen die gewünschte Masse zu erzielen, kann es erforderlich sein, dass der Tubus so axial bzw. vertikal verstellt wird, dass die Massen aller Tropfen in dem Zeitabschnitt erhöht oder erniedrigt werden. Dieser Regelmechanismus soll im Folgenden beispielhaft erläutert werden:

Eine I.S.-Glasformmaschine mit zehn Sektionen soll bei einer Produktionsgeschwindigkeit von 120 Tropfen pro Minute in den ersten fünf Sektionen mit einem Tropfengewicht von 300 g arbeiten. Die fünf folgenden Sektionen sollen Tropfen mit einem um 5 % niedrigeren Gewicht verarbeiten. Aus dem Verhältnis der Tropfengewichts-Sollwerte ergeben sich fünf Scherenschnitt-Zeitabstände (Sektionen 1-5) mit 512,82 ms, gefolgt von fünf Scherenschnitt-Zeitabstände (Sektionen 6-10) mit 487,18 ms. Eine Überprüfung durch Erfassung der Tropfengewichts-Istwerte ergibt, dass die ersten fünf Sektionen korrekt mit 300 g geladen werden, jedoch das Tropfengewicht in den fünf folgenden Sektionen um 10 g zu niedrig ist. Die Regelung ändert nun das Verhältnis der Scherenschnitt-Zeitabstände auf beispielsweise fünf Scherenschnitt-Zeitabstände (Sektionen 1-5) mit 507,82 ms, gefolgt von fünf Scherenschnitt-Zeitabständen (Sektionen 6-10) mit 492,18 ms. Die Folge hiervon ist, dass die Tropfen in den Sektionen 1-5 etwas leichter und dafür die Tropfen der Sektionen 6-10 etwas schwerer werden. Damit liegt das Gewicht aller zehn zu erzeugenden Tropfen unterhalb ihres jeweiligen Sollwertes. Entsprechend dieser Tendenz wird nun die axiale Verstellung des Tubus über einen Antrieb des Tubus,angesteuert, um das Tropfengewicht insgesamt für alle zu erzeugenden Tropfen etwas zu erhöhen. Der zyklische Durchlauf dieser Anpassungsstruktur gewährleistet, dass sich das gewünschte Verhältnis der Tropfengewichte einstellt.

Der oben beschriebene Zeitabschnitt kann entsprechend dem Verhältnis der gewünschten Tropfenmassen zueinander in unterschiedliche Zeitabstände von Scherenschnitt zu Scherenschnitt unterteilt werden. Grundsätzlich kann innerhalb des konstanten Zeitabschnitts die Aufeinanderfolge der unterschiedlichen Scherenschnitt-Zeitabstände und damit das gewünschte Verhältnis der Tropfenmassen bzw. Tropfengewichte zueinander beliebig gewählt werden. Mit dieser relativ einfachen Einstellung der Scherenschnitt-Zeitpunkte ist zumindest eine Annäherung an die gewünschten Tropfenmassen erreicht. Es kann aber auch vorgesehen sein, dass der Zeitabschnitt nicht entsprechend dem Verhältnis der gewünschten Tropfenmassen in die Zeitabstände unterteilt wird, sondern dass das Verhältnis der Zeitabstände von dem Verhältnis der gewünschten Tropfenmassen abweicht. Beispielsweise könnte bei einem Übergang von mehreren aufeinander folgenden, gleich langen Zeitabständen hin zu mehreren aufeinander folgenden kürzeren Zeitabständen der erste kürzere Zeitabstand etwas länger sein als die weiteren kürzeren Zeitabstände, wobei jedoch durch die kürzeren Scherenschnitt-Zeitabstände die Erzeugung gleich schwerer Tropfen vorgesehen ist. Solch eine Einstellung kann insbesondere aufgrund der Regelung erfolgen.

Vorzugsweise stellt das Verhältnis der unterschiedlichen Zeitabstände von Scherenschnitt zu Scherenschnitt eine Funktion des Verhältnisses der gewünschten Tropfenmassen dar. Durch diese Funktion können diverse Randparameter, die auf das Verhältnis der Massen aufeinander folgender Tropfen einen Einfluss haben, berücksichtigt werden. Insbesondere können in die Funktion der Tropfendurchmesser, die Glaskonsistenz, die Produktionsgeschwindigkeit und/oder die Glastemperatur eingehen. Auch kann, wenn wie unten beschrieben ein Plunger eingesetzt wird, die Art der Plungeransteuerung in die Funktion eingehen.

Der oben beschriebene vorgegebene, konstante Zeitabschnitt des Speiserkopfbetriebs kann der Zeitabschnitt sein, in welchem Tropfen für einen vollständigen Maschinenzyklus erzeugt werden. Auf diese Weise wird innerhalb jedes Maschinenzyklus ein Satz eines gewünschten Sortiments unterschiedlich schwerer Glasgegenstände erzeugt. Es kann aber auch vorgesehen sein, dass während des vorgegebenen, konstanten Zeitabschnitts des Speiserkopfbetriebs Tropfen für mehrere vollständige Maschinenzyklen erzeugt werden und dass in einem einzelnen Maschinenzyklus Glasgegenstände gleicher Masse erzeugt werden, jedoch in aufeinander folgenden Maschinenzyklen unterschiedliche Massen verarbeitet werden.

Es kann insbesondere vorgesehen sein, dass in dem Speiserkopf ein oder mehrere Plunger angeordnet sind, die auf- und abbewegbar sind und das Ausströmen schmelzflüssigen Glases aus dem mindestens einen Tropfenauslass beeinflussen. Während seiner Aufwärtsbewegung besitzt der mindestens eine Plunger eine Saugwirkung, während seiner Abwärtsbewegung eine Presswirkung. Es kann vorgesehen sein, dass der mindestens eine Plunger so angesteuert wird, dass die parametrierbare, also für jeden Tropfen gesondert einstellbare Phasenlage des Scheren-Überschnitts und des Zeitpunkts, zu dem der Plunger seine Bewegung von abwärts zu aufwärts umkehrt, für die Scherenschnitte innerhalb des vorgegebenen Zeitabschnitts konstant gehalten wird oder unterschiedlich ist. Mit Scheren-Überschnitt wird der Tropfenabschnitt, also der Vorgang des Abschneidens eines Tropfens durch die Schere, bezeichnet Hierbei kann es sich um den Vorgang einer geringen Überlappung von Scherenblättern handeln. Je größer die Unterschiede in der Tropfenmasse sind, desto eher kann eine unterschiedliche Anpassung der Plungerbewegung erforderlich sein, wie unten beschrieben ist.

Eine Plungersteuerung bietet in der Regel die Möglichkeit, die Abwärts- und die Aufwärtsbewegung des Plungers getrennt zu modulieren. Daher kann, um die Phasenlage zum Scherenschnitt einzustellen, die Dauer der Bewegung des Plungers in Pressrichtung konstant gehalten werden, während die Bewegungsdauer des Plungers in Saugrichtung an den jeweiligen Zeitabstand von zwei aufeinander folgenden Scherenschnitten angepasst wird. Alternativ kann auch eine entsprechende Anpassung der Bewegungsdauer des Plungers in Pressrichtung vorgenommen und die Bewegungsdauer des Plungers in Saugrichtung konstant gehalten werden. Auch beide Teilbewegungen des Plungers können angepasst werden, um die Phasenlage zum Scherenschnitt einzustellen. Die Phasenlage der Plungerbewegung zum Scherenschnitt für die einzelnen Scherenzyklen unterschiedlich zu gestalten, ist insbesondere dann sinnvoll, wenn in verschiedenen Scherenzyklen verschiedene Tropfenmassen erzeugt werden. Denn dadurch kann die Einschnittstelle der Schere in einem aus dem Tropfenauslass austretenden Glasstrang optimiert werden. Bei einem sich zyklisch wiederholenden, vorgegebenen Zeitabschnitt des Speiserkopfbetriebs, z.B. dem Zeitabschnitt eines Maschinenzyklus, werden jedoch in der Regel einander entsprechende Scherenzyklen innerhalb der aufeinander folgenden Zeitabschnitte dieselbe Phasenlage zum Scherenschnitt aufweisen.

Eine weitere Möglichkeit zur Anpassung der Plungerbewegung an die zeitliche Sequenz der Scherenschnitte kann auch dadurch vorgenommen werden, dass eine Stillstandsdauer des Plungers in seiner oberen Umkehrposition angepasst wird.

Vorzugsweise wird die Phasenlage der Bewegung eines Tropfenverteilers an die unterschiedlichen Scherenschnitt-Zeitabstände angepasst, um sicherzustellen, dass der Tropfenverteiler genügend lange für den Durchlauf eines Tropfens stillsteht.

Auch das Bewegungsprofil des Plungers bzw. des zugehörigen Plungerhalters hat einen Einfluss auf die Masse bzw. Kontur eines durch den Tropfenauslass ausgegebenen Tropfens. So spielt beispielsweise eine Rolle, mit welcher Geschwindigkeit sich der Plunger von seiner unteren Endstellung wieder entfernt. Eine längere Stillstandsdauer des Plungers bzw. Plungerhalters in seiner unteren Endstellung bewirkt ein geringeres Artikelgewicht, weil der Plunger in seiner unteren Endstellung den für den Glasaustritt wirksamen Querschnitt des Tropfenauslasses in der Regel teilweise verschließt.

Daher kann auch vorgesehen sein, zusätzlich zu der axialen Verstellung des Tubus eine Veränderung der Bewegung bzw. des Bewegungsprofils des mindestens einen Plungers vorzunehmen, um das Tropfengewicht insgesamt für alle zu erzeugenden Tropfen zu erhöhen oder zu verringern. Insbesondere kann eine Veränderung der Geschwindigkeit des Plungers in der Abwärts-und/oder Aufwärtsbewegung vorgenommen werden. Dies kann mittels einer entsprechenden Ansteuerung eines Plungerhalters geschehen.

Insbesondere während der Einschwingphase der Regelung kann es nötig sein, den Ansteuerungszeitpunkt einiger Sektionen nachträglich anzupassen. Dies kann durch eine manuelle Eingabe in einer Maschinensteuerung, oder vorzugsweise automatisiert über beispielsweise eine Standard-Kommunikationsverbindung durch eine Scherensteuerungseinheit erfolgen.

Die Aufgabe bezüglich der Vorrichtung wird durch die Merkmale des Anspruchs 11 gelöst. Die Vorrichtung zur Erzeugung unterschiedlicher Glastropfenmassen bei der Herstellung von Glasgegenständen, insbesondere Hohlglasbehältem, weist einen Speiserkopf eines Speisers auf. Ferner weist die Vorrichtung mindestens einen Tropfenauslass mit einer darunter angeordneten Schere auf. Eine Antriebssteuerungseinheit ist vorgesehen, um die Schere zyklisch zu betätigen. Dadurch, dass die Antriebssteuerungseinheit so ausgelegt ist, dass der Zeitabstand zwischen jeweils zwei aufeinander folgenden Scherenschnitten variiert werden kann, wird eine Veränderung der Masse von aufeinander folgenden Tropfen möglich. Die Vorrichtung ist zur Herstellung eines Sortiments einer Anzahl von unterschiedlichen Glasgegenständen vorgesehen. Um die für die unterschiedlichen Glasgegenstände erforderlichen Tropfen unterschiedlicher Masse zu erzeugen, ist in der Antriebssteuerungseinheit ein vorgegebener Zeitabschnitt des Speiserkopfbetriebs abgespeichert. Innerhalb dieses Zeitabschnitts wird die für das herzustellende Sortiment benötigte Anzahl von Tropfen erzeugt. Ferner ist in der Antriebssteuerungseinheit eine Funktion des Verhältnisses der gewünschten Tropfenmassen abgespeichert. Diese Funktion bestimmt das Verhältnis von unterschiedlichen Zeitabständen von Scherenschnitt zu Scherenschnitt. Die Zeitabstände unterteilen den genannten Zeitabschnitt.

Die Antriebssteuerungseinheit ist ausgelegt, eine Regelung der Tropfenmassen durchzuführen. Dazu ist in der Antriebssteuerungseinheit ein Massenbezugs-Sollwert abgespeichert, der mit einem Massenbezugs-Istwert verglichen wird. Der Massenbezugs-Istwert wird von einer Istwert-Erfassungeinheit erfasst und über eine Datenleitung der Antriebssteuerungseinheit zugeführt. Die Antriebssteuerungseinheit passt die Scherenschnitt-Zeitabstände zur Minimierung der Differenz von Ist- und Sollwert an. Zur Regelung der Tropfenmassen ist die Antriebssteuerungseinheit zusätzlich ausgelegt, eine Antriebseinheit eines Tubus zu seiner axialen Verstellung anzusteuern.

Auch die Vorrichtung gemäß Anspruch 12 löst die Aufgabe bezüglich der Vorrichtung. Bei dieser Vorrichtung ist ein Regelungssystem vorgesehen, welches so parametriert werden kann, dass bezogen auf den vorgegebenen Zeitabschnitt nur ein einziger Tropfen oder mehrere einzelne Tropfen gleichen Gewichts für eine Istwert-Massenbezugswert-Bestimmung dienen. Statt einzelner Tropfen können für die Istwert-Bestimmung auch ein oder mehrere Gruppen von innerhalb des Zeitabschnitts erzeugten Tropfen gleichen Gewichts dienen. Das Regelungssystem ist ausgelegt, zur Regelung der Tropfenmassen eine Antriebseinheit eines Tubus zu seiner axialen Verstellung anzusteuern.

Bei dem Regelungssystem kann es sich um eine Prozesskontrolleinheit handeln, wobei eine Kommunikationsverbindung zwischen der Antriebssteuerungseinheit und der Prozesskontrolleinheit besteht. Vorzugsweise erfasst die Prozesskontrolleinheit die Massenbezugs-Istwerte.

In dem Speiserkopf kann mindestens ein auf- und abbewegbarer Plunger angeordnet sein, um das Ausströmen des Glases aus dem mindestens einen Tropfenauslass zu beeinflussen.

Weitere bevorzugte Ausgestaltungen der Vorrichtungen sind in den Ansprüchen 14 bis 19 angegeben. Insbesondere kann, wenn wie beschrieben ein Plunger eingesetzt wird, die Art der Plungeransteuerung in die Funktion gemäß Anspruch 14 eingehen.

Die Vorteile, die oben im Zusammenhang mit dem erfindungsgemäßen Verfahren beschrieben sind, treffen entsprechend auf die erfindungsgemäßen Vorrichtungen zu.

Im Folgenden wird die Erfindung anhand von Ausführungsbeispielen näher erläutert, wobei auf die Figuren Bezug genommen wird. Es zeigen:
Fig. 1 schematisch eine Teilansicht einer Vorrichtung zur Erzeugung unterschiedlicher Glastropfenmassen bei der Herstellung von Hohlglasbehältern mittels einer I.S.-Glasformmaschine,
Fig. 2 schematisch eine andere Teilansicht einer der Vorrichtung gemäß Fig. 1 sehr ähnlichen Vorrichtung mit nur einem Tropfenauslass,
Fig. 3 einen typischen prinzipiellen Zeitablauf bei der Erzeugung von Tropfen unterschiedlicher Masse für die Verarbeitung in einer I.S.-Glasformmaschine,
Fig. 3a einen weiteren typischen prinzipiellen Zeitablauf bei der Erzeugung von Tropfen unterschiedlicher Masse für die Verarbeitung in einer 1.S.-Glasformmaschine,
Fig. 4 ein Beispiel eines konkreten Zeitablaufs bei der Erzeugung von Tropfen unterschiedlicher Masse für die Verarbeitung in einer I.S.-Glasformmaschine.
Fig. 5 ein Blockbild zur Erläuterung einer Verschaltung von Vorrichtungskomponenten bei der Erzeugung unterschiedlicher Glastropfenmassen,
Fig. 6 ein Blockbild zur Erläuterung einer anderen Verschaltung von vorrichtungskomponenten bei der Erzeugung unterschiedlicher Glastropfenmassen.

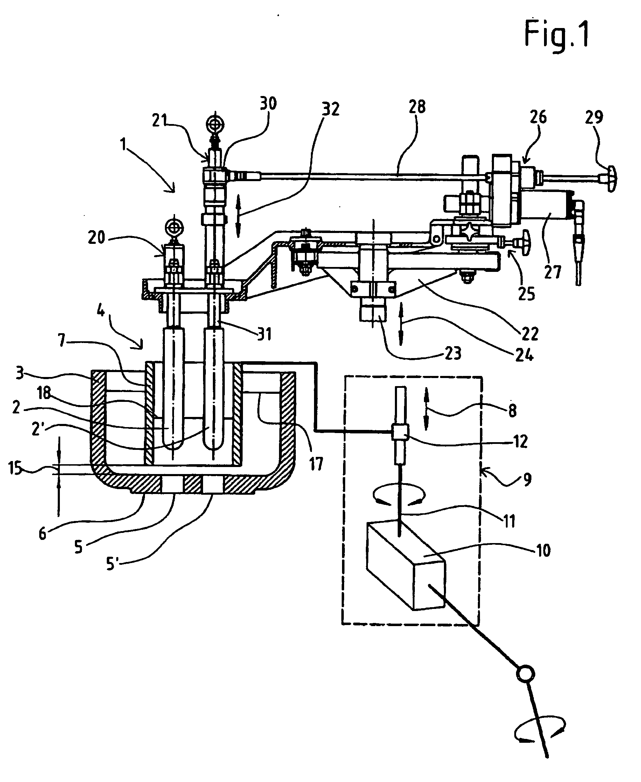

Die Vorrichtung zur Erzeugung unterschiedlicher Glastropfenmassen gemäß Fig. 1 ist mit 1 bezeichnet. Die Vorrichtung 1 weist zwei Plunger 2 und 2' auf. Die Plunger 2, 2' sind in einem Speiserkopf 3 eines Speisers 4 angeordnet. Der Speiserkopf 3 besitzt einen zweifachen Tropfenauslass, der durch zwei Durchbrechungen 5 und 5' in einem Tropfring 6 gebildet ist. Ferner weist der Speiserkopf 3 einen Tubus 7 auf, der die beiden Plunger 2, 2' umgibt. Der Tubus 7 ist in an sich bekannter Weise in seiner als Stellgröße dienenden axialen Position gemäß Doppelpfeil 8 veränderbar. Ein Antrieb 9 des Tubus 7 ist in Fig. 1 schematisiert und nur teilweise gezeigt. Zur Verstellung der axialen Position des Tubus 7 ist ein nicht gezeigter Motor vorgesehen, der über ein Winkelgetriebe 10 eine Spindel 11 antreibt. Die Spindel 11 wirkt mit einer mit dem Tubus 7 verbundenen Spindelmutter 12 zusammen. Weiterhin kann ein Mechanismus (nicht gezeigt) vorgesehen sein, um den Tubus 7 zur symmetrischen Anordnung um den zweifachen Tropfenauslass 5, 5' herum waagerecht verstellen zu können. Durch die vertikale Verstellung gemäß Doppelpfeil 8 wird ein Spalt 15 zwischen einem unteren Ende des Tubus 7 und dem Tropfring 6 eingestellt.

In dem Speiserkopf 3 befindet sich schmelzflüssiges Glas. Der Glasstand au-ßerhalb des Tubus 7 ist mit 17 bezeichnet, während der Glasstand innerhalb des Tubus mit 18 bezeichnet ist. Der Glasstand 18 hängt vom Glasstand 17 und von der Größe des Spalts 15 ab. Der Glasstand 18 bestimmt letztendlich das aus den Durchbrechungen 5, 5' pro Zeiteinheit bzw. pro Feederzyklus austretende Glasvolumen. Durch eine vertikale Verstellung des Tubus 7 gemäß Doppelpfeil 8 kann somit beispielsweise eine Änderung des Glasstands 17 oder eine Viskositätsänderung des schmelzflüssigen Glases über einen Zeitraum ausgeglichen werden, der gegenüber der Dauer eines Feederzyklus relativ lang ist. Insbesondere ist die vertikale Verstellung des Tubus auch vorgesehen, um erfindungsgemäß wie oben beschrieben zur Regelung der unterschiedlichen Tropfenmassen alle Tropfengewichte zu erhöhen oder zu erniedrigen.

Die Plunger 2, 2' sind jeweils mit Befestigungsmitteln 20 bzw. 21 an einem Plungerhalter 22 befestigt. Der Plungerhalter 22 ist an einer Tragsäule 23 befestigt, die senkrecht auf und ab bewegbar ist, wie durch Doppelpfeil 24 angedeutet ist. Bei dem Antriebsmechanismus für die Tragsäule 23, der nicht gezeigt ist, kann es sich beispielsweise um den Antriebsmechanismus gemäß der DE 203 16 501 U1 handeln. Der Plungerhalter 22 weist Mittel 25 zur horizontalen Grundjustierung auf.

Während die Höhe des Plungers 2 relativ zu dem Plungerhalter 22 fest ist, kann die Höhe des Plungers 2' relativ zu dem Plungerhalter 22 durch eine Höhenverstelleinrichtung 26 verändert werden. Die Höhenverstelleinrichtung 26 weist eine Motor-Getriebe-Einheit 27 auf, welche eine Welle 28 antreibt. Ein Handrad 29 erlaubt ein manuelles Drehen der Welle 28. Die Welle 28 wirkt über ein Schneckengetriebe 30 auf ein Führungselement 31 der Befestigungsmittel 21, um den Plunger 2' gemäß Doppelpfeil 32 zu bewegen.

In allen Figuren sind gleiche Merkmale mit gleichen Bezugszeichen versehen.

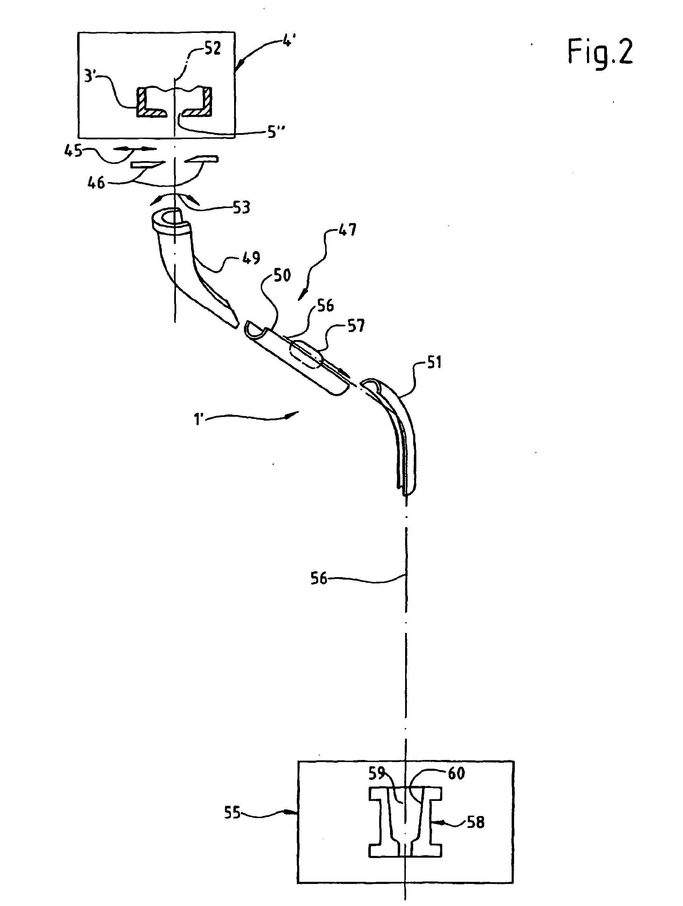

Fig. 2 zeigt schematisch eine ähnliche Vorrichtung 1' mit einem Speiserkopf 3' eines Speiser 4'. Der Speiserkopf 3' besitzt nur eine Durchbrechung 5" als Tropfenauslass. Aus dem Tropfenauslass 5" tritt ein Strang schmelzflüssigen Glases (nicht gezeigt) aus, von dem zyklisch durch eine in Richtung des Doppelpfeils bewegliche Schere 46 Tropfen abgetrennt werden.

Unterhalb der Schere 46 befindet sich ein Rinnensystem 47. Das Rinnensystem 47 besitzt eine Scooprinne 49 eines Tropfenverteilers, eine Langrinne 50 und eine nach unten gekrümmte Endrinne 51. Die Scooprinne 49 ist in hier nicht näher dargestellter, an sich bekannter Weise um eine Längsachse 52 des Tropfenauslasses 5", wie durch Doppelpfeil 53 angedeutet, schwenkbar. Die Scooprinne 49 fängt daher sämtliche durch die Schere 46 abgetrennte Tropfen auf und leitet sie je nach ihrer Schwenkstellung nacheinander dem Rest des Rinnensystems 47 zu. Das Rinnensystem 47 weist entsprechend der Anzahl der Sektionen einer I.S.-Glasformmaschine 55 eine Reihe von Langrinnen 50 und Endrinnen 51 auf, von denen in Fig. 2 der Übersichtlichkeit halber jeweils nur eine gezeigt ist.

Die Endrinne 51 ist derartig nach unten gekrümmt, dass ein Tropfen senkrecht aus der Endrinne 51 austritt. Das Rinnensystem 47 bewirkt eine Tropfenbahn 56, wie sie beispielhaft für den Tropfen 57 dargestellt ist.

Die Tropfen 57 gelangen auf ihrer Bahn 56 in eine Form 58, z.B. eine Vorform, der Glasformmaschine 55. Eine Längsachse 59 einer Formausnehmung 60 der Form 58 fällt mit dem letzten Abschnitt der Tropfenbahn 56 zusammen. Die Form 58 ist beispielhaft für eine Reihe von Formen der t.S.-Glasfvrmmaschine 55 dargestellt.

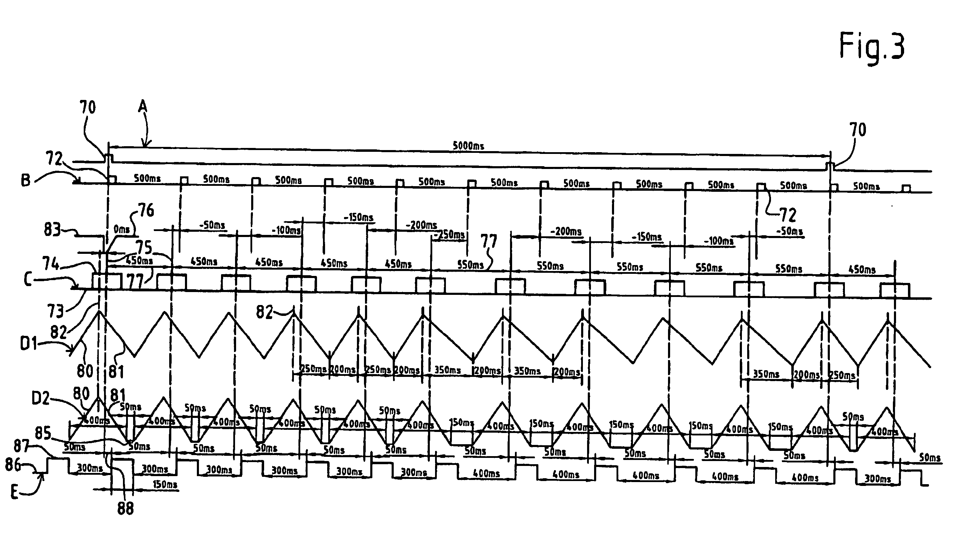

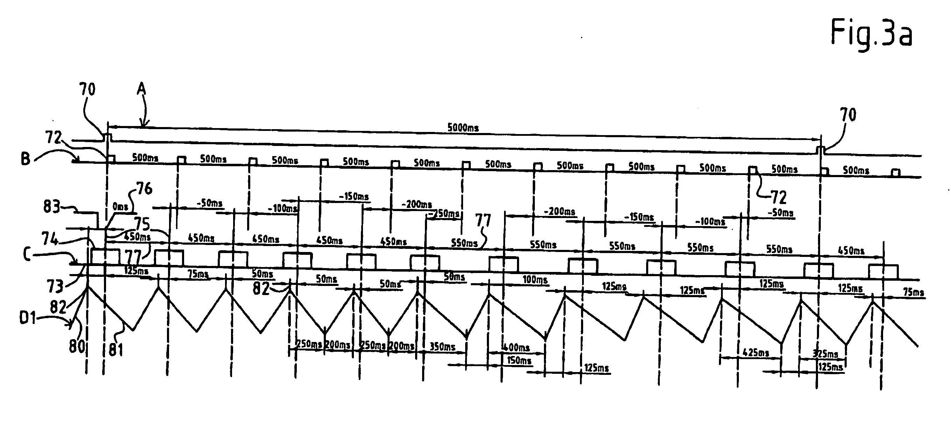

Fig. 3 zeigt ein Beispiel-Timing einer I.S.-Glasformmaschine mit zehn Sektionen bei 120 Schnitten pro Minute, wobei ein Sortiment von Hohlglasbehältern hergestellt werden soll, bei dem zunächst fünf leichte und anschließend fünf schwere Tropfen zu erzeugen sind.

Über einer horizontalen Achse sind aufgetragen ein Maschinenzyklus A, eine externe Taktsignal-Sequenz B, eine Scherenzyklus-Sequenz C, eine erste Variante einer Plungerzyklus-Sequenz D1, eine zweite Variante einer Plungerzyklus-Sequenz D2 und eine Bewegung der Scooprinne E.

Der Maschinenzyklus A erstreckt sich über 5000 ms von einem Null-referenzsignal 70 zu einem weiteren Null-Referenzsignal 70. Die Scherenzyklus-Sequenz C und die Plungerzyklen-Sequenzen D1, D2 erstrecken sich im Wesentlichen über den Zeitraum des Maschinenzyklus A. Die externe Taktsignal-Sequenz B weist eine Reihe von externen Taktsignalen 72 auf. (Das erste und letzte gezeigte Taktsignal 72 des Maschinenzyklus A sind bezeichnet.)

Die Scherenzyklus-Sequenz C weist Ruhezeiten 73 und Bewegungszeiten 74 einer Schere auf. Die Zeitpunkte des Scheren-Überschnitts sind mit 75 bezeichnet und liegen bei diesem Ausführungsbeispiel in der Mitte der Bewegungszeiten 74. Der zeitlich letzte Scheren-Überschnitt 75 des Maschinenzyklus A weist keine Verzögerung zu dem steuerungsmäßig nachfolgenden externen Taktsignal 72 auf und fällt mit dem Beginn dieses Taktsignals zusammen. Die neun weiteren Scheren-Überschnitte 75 des Maschinenzyklus A liegen jedoch zeitlich vor dem steuerungsmäßig nachfolgenden externen Taktsignal, weisen also zu diesem eine negative Verzögerung im Bereich von -50 ms bis -250 ms auf. Die Verzögerungszeiten sind jeweils bei 76 dargestellt. Die ersten fünf Zeitabstände 77 von Scherenschnitt 74 zu Scherenschnitt 74 betragen 450 ms und die weiteren fünf Zeitabstände 77 des Maschinenzyklus A betragen 550 ms. Die Zeitabstände 77 werden auch als Scherenzyklus bezeichnet

D1 zeigt den zyklischen Verlauf der Bewegung eines Plungers, wobei mit 80 jeweils die pressenden Abwärtsbewegungen des Plungers (aufsteigende Flanken von D1) und mit 81 jeweils die saugenden Aufwärtsbewegungen des Plungers (abfallende Flanken von D1) bezeichnet sind. Die Zeitpunkte, zu denen sich der Plunger in seiner unteren Umkehrstellung befindet, sind für einige Plungerbewegungen mit gestrichelten Linien 82 gekennzeichnet. Ein zeitlicher Abstand 83 zwischen der Plunger-Bewegungsumkehr 82 und dem Zeitpunkt des Scheren-Überschnitts 75 gibt die Phasenlage von dem Scheren-Über schnitt 75 zum Plunger an. Diese Phasenlage 83 ist parametrierbar, d.h. sie ist für jeden Zeitabstand 77 von Scheren-Überschnitt 75 zu Scheren-Überschnitt 75 einstellbar. In Fig. 3 ist sie über den gesamten Maschinenzyklus A konstant Für alle Scherenschnitte 74 innerhalb des Maschinenzyklus A liegt der Zeitpunkt 82 der Bewegungsumkehr des Plungers etwas vor dem Scheren-Überschnitt 75.

Die Einstellung der Phasenlage 83 wird bei der Variante D1 des Plungerzyklus dadurch erreicht, dass die Dauer der Aufwärtsbewegung 81 des Plungers entsprechend den unterschiedlichen Zeitabständen 77 von Scheren-Überschnitt 75 zu Scheren-Überschnitt 75 variiert wird. Während bei den ersten fünf Scherenschnitten 74 die Aufwärtsbewegung des Plungers 250 ms dauert, erhöht sie sich bei den weiteren fünf Scherenschnitten 74 auf 350 ms. Die Dauer der Abwärtsbewegung 80 des Plungers bleibt hingegen über den gesamten Maschinenzyklus A mit 200 ms konstant.

Bei der Variante D2 der Plungerbewegung hingegen wird die gewünschte Phasenlage 83 zwischen den Zeitpunkten der Scheren-Überschnitte 75 und dem Plunger dadurch erreicht, dass eine Stillstandsdauer 85 des Plungers in seiner oberen Umkehrstellung verändert wird. Die Stillstandsdauer 85 erstreckt sich für die ersten fünf Scherenschnitte 74 über 50 ms und für die weiteren fünf Scherenschnitte 74 über 150 ms. Die auch bei D2 mit 80 bzw. 81 bezeichneten Abwärts- und Aufwärtsbewegungen des Plungers bleiben hingegen über den gesamten Maschinenzyklus A konstant und sind zeitlich symmetrisch zueinander.

Die Bewegung E der Scooprinne zeigt Stillstandszeiten 86 und Bewegungszeiten 87. Die Bewegungszeiten 87 der Scooprinne beginnen mit einer Verzögerungszeit 88 von 50 ms nach dem Zeitpunkt 75 des Scheren-Überschnitts. Die Stillstandszeit 86 der Scooprinne erhöht sich von 300 ms bei den ersten fünf Scherenschnitten 74 auf 400 ms bei den weiteren fünf Scherenschnitten 74 des Maschinenzyklus A.

In Fig. 3a ist ein Beispiel eines Zeitablaufs gezeigt, bei dem die Phasenlage 83 für die einzelnen Scherenzyklen 77 unterschiedlich ist. Abgesehen von den Unterschieden in der Phasenlage 83 entspricht das Beispiel-Timing dem in Fig. 3 gezeigten Beispiel-Timing, wobei die Bewegung E der Scooprinne nicht dargestellt ist und keine zweite Variante D2 der Plungerbewegung gezeigt ist. Auch gemäß Fig. 3a sind fünf leichte und fünf schwere Tropfen innerhalb eines Maschinenzyklus A zu erzeugen, wobei der Klarheit halber darauf hingewiesen wird, dass der erste in Fig. 3a dargestellte Scherenschnitt 74 noch zum vorhergehenden Maschinenzyklus gehört. Obwohl die Tropfen der ersten fünf Scherenschnitte 74 des Maschinenzyklus A, bei denen es sich um die leichten Tropfen handelt, gleich schwer sein sollen, ist die Phasenlage 83 für diese fünf Scherenschnitte 74 nicht konstant. Vielmehr beträgt der zeitliche Abstand 83 zwischen der Plunger-Bewegungsumkehr 82 und dem Zeitpunkt des Scheren-Überschnitts 75 für den ersten leichten Tropfen 75 ms und für die weiteren leichten Tropfen 50 ms. Dies ist dadurch begründet, dass die Bedingungen bei dem ersten leichten Tropfen noch durch den vorhergehenden schweren Tropfen beeinflusst sind. Dieser Einfluss wird durch die entsprechend angepasste Phasenlage 83 kompensiert, um sicherzustellen, dass der Scherenschnitt 74 jeweils in einer Einschnürung des aus dem Tropfenauslass austretenden Glasstrangs erfolgt. Entsprechendes gilt für den Übergang vom fünften zum sechsten Scherenschnitt 74 des gezeigten Maschinenzyklus A. Der sechste Scherenschnitt 74 erzeugt zwar einen schweren Tropfen, jedoch beträgt die Phasenlage 83 aufgrund des vorhergehenden leichten Tropfens nur 100 ms. Bei dem siebten bis zehnten Scherenschnitt 74 beträgt sie hingegen 125 ms. Die Einstellung der Phasenlage 83 wird bei diesem Beispiel-Timing dadurch erreicht, dass nicht nur die Dauer der Aufwärtsbewegung 81 des Plungers, sondern auch die Dauer der Abwärtsbewegung 80 des Plungers variiert wird.

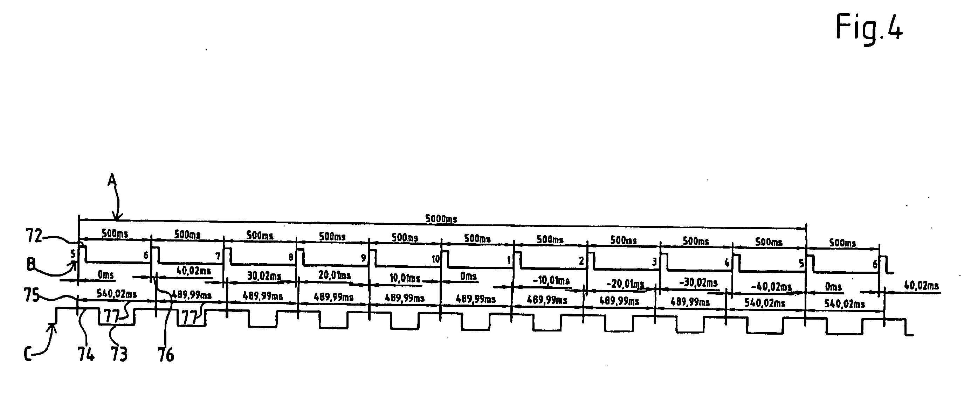

In Fig. 4 sind die ersten sechs externen Taktsignale mit 5 bis 10 und die weiteren vier externen Taktsignale mit 1 bis 4 bezeichnet. Bei dieser Scherenzyklus-Sequenz C ist vorgesehen, dass der erste und letzte Tropfen des Maschinenzyklus A, d.h. entsprechend über mehrere Maschinenzyklen betrachtet jeweils zwei aufeinander folgende Tropfen, schwerere Tropfen sind als die weiteren acht Tropfen. Bei diesem Ausführungsbeispiel ist ein Rechenfaktor, der vorrichtungsspezifische Daten, wie Tropfendurchmesser, Produktionsgeschwindigkeit, Glastemperatur etc., berücksichtigt, verwendet worden, um eine Voreinstellung der Scherenbewegung zu erreichen, die möglichst dicht an den im ausgeregelten Zustand gegebenen Verhältnissen liegt. Eine Veränderung einer Plungerbewegung, um die Phasenlage zwischen den Zeitpunkten des Scheren-Überschnitts 75 und den Zeitpunkten der Bewegungsumkehr des Plungers in seiner unteren Stellung zu erreichen, ist in diesem Ausführungsbeispiel nicht vorgesehen.

Die Zeitverläufe der Fig. 3, 3a und 4 könnten jeweils bei den Vorrichtungen 1,1' gemäß der Fig. 1 und 2 angewandt werden.

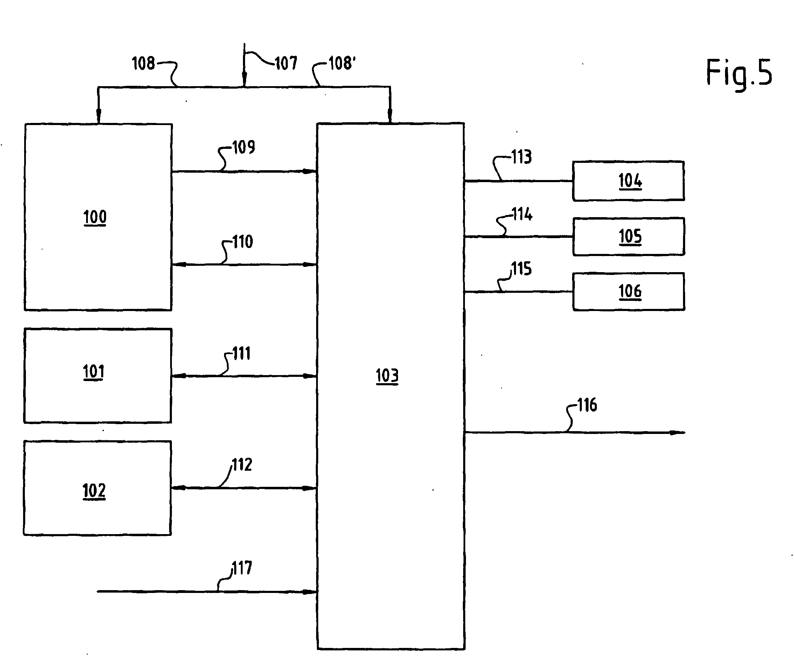

Fig. 5 zeigt eine Maschinensteuerung 100 für eine I.S.-Glasformmaschine 55, eine Parametrierungseinheit 101, eine Istwert-Erfassungseinheit 102, eine Antriebssteuerungseinheit 103 sowie einen Plungerhalter- bzw. Plungerantrieb 104, einen Scherenantrieb 105 und einen Tropfenverteilerantrieb 106. Ein externes Taktsignal 72 wird über Datenleitungen 107, 108 und 108' an die Maschinensteuerung 100 und die Antriebssteuerungseinheit 103 gegeben. Die Maschinensteuerung 100 schickt über eine Datenleitung 109 ein Null-Referenzsignal 70 an die Antriebssteuerungseinheit 103. Ferner besteht zwischen der Antriebssteuerungseinheit 103 und der Maschinensteuerung 100, der Parametrierungseinheit 101 sowie der Istwert-Erfassungseinheit 102 jeweils eine Standard-Kommunikationsverbindung 110, 111 und 112. Die Antriebssteuerungseinheit 103 ist jeweils Ober Steuerleitungen 113, 114 und 115 mit dem Plungerhalterantrieb 104, dem Scherenantrieb 105 bzw. dem Tropfenverteiler antrieb 106 verbunden.

Ferner ist eine Steuerleitung 116 von der Antriebssteuerungseinheit 103 zu einem Antrieb 9 eines Tubus 7 vorgesehen.

Bei der Parametrierungseinheit 101 kann es sich z.B. um ein Bedienterminal und/oder ein zentrales Parametrierungssystem handeln. Eine Eingabe der gewünschten Tropfengewichte und die Parametrierung der Regelung erfolgen über die Parametrierungseinheit 101. Über die Istwert-Erfassungseinheit 102 erfolgt die automatische Erfassung der Massenbezugs-Istwerte, also beispielsweise die Erfassung der Pressstempelstellung.

Die Antriebssteuerungseinheit 103 dient dazu, die Regelung der Tropfenmassen bzw. -gewichte durch Variation der Zeitabstände 77 von Scherenschnitt zu Scherenschnitt in Kombination mit einer Variation der Plungerbewegung in Saug- und/oder Pressrichtung sowie einer entsprechenden Ansteuerung der axialen Stellung des Tubus 7 bzw. seines Antriebs 9 über die Steuerleitung 116 durchzuführen.

Eine manuelle Eingabe von Daten in die Steuerungseinheit 103 kann über eine Datenleitung 117 erfolgen. Eine solche manuelle Eingabe von Daten könnte auch mittels der Parametrierungseinheit 101 vorgenommen werden.

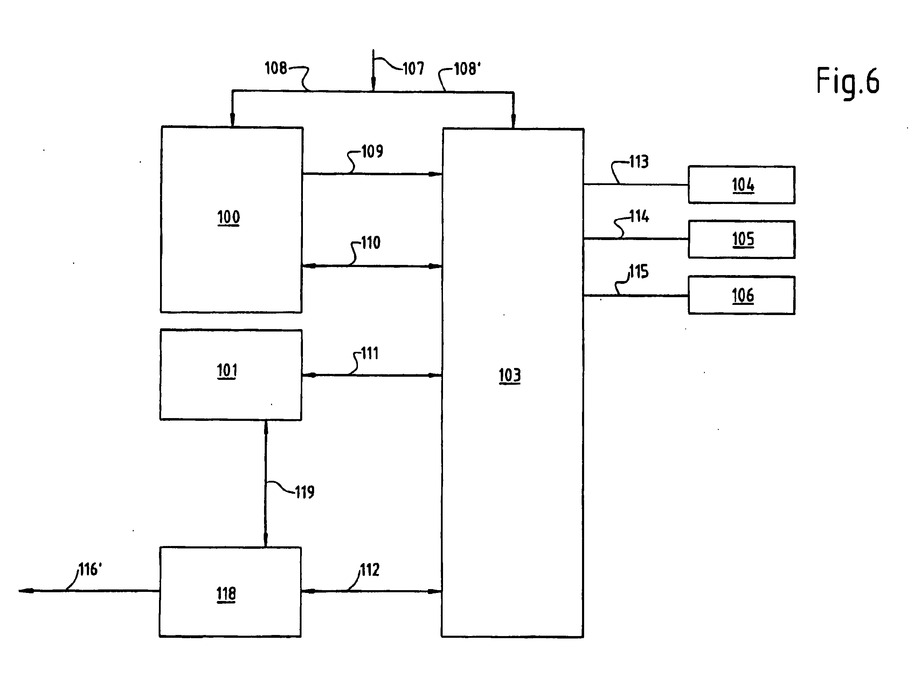

Gemäß Fig. 6 kann alternativ zu der Regelung nach Fig. 5, die ausschließlich mittels der Antriebssteuerungseinheit 103 erfolgt, auch eine Verstellung des Tubus 7 durch ein anderes Regelungssystem, z.B. eine die Massenbezugs-Istwerte erfassende Prozesskontrolleinheit 118, vorgenommen werden, das so parametriert werden kann, dass nur die Gewichte einzelner Tropfen oder Gruppen von Tropfen gleichen Gewichts für die Istwert-Bestimmung dienen. So könnten bei dem oben zur Erläuterung des Regelmechanismus beschriebenen Beispiel, die ersten fünf Tropfen mit Hilfe einer bereits bestehenden Prozesskontrolleinheit 118 durch eine Verstellung des Tubus 7 hinsichtlich ihres Gewichts geregelt werden, wozu die Prozesskontrolleinheit 118 durch eine Steuerleitung 116' mit dem Tubusantrieb 9 verbunden ist. Damit dieser Regelmechanismus mit dem durch die Antriebssteuerungseinheit 103 erfolgenden Regelmechanismus, bei dem die Scherenzyklen verändert werden, zusammenwirken kann, sind die Prozesskontrolleinheit 118 und die Antriebssteuerungseinheit 103 durch eine Standard-Kommunikationsverbindung 112 verbunden. Ferner ist gemäß Fig. 6 noch eine Standard-Kommunikationsverbindung 119 zwischen der Parametrierungseinheit 101 und der Prozesskontrolleinheit 118 vorgesehen. Über die Parametrierungseinheit 101 gibt ein Vorrichtungs-Bediener vor, welches Tropfengewicht er in welchen Sektionen wünscht und welche Sektionen für die Istwert-Bestimmung zur Regelung herangezogen werden. In dem oben zur Erläuterung des Regelmechanismus beschriebenen Beispiel würde die Prozesskontrolleinheit 118 dafür sorgen, dass das Gewicht der Tropfen für die Sektionen 1-5 durch Verstellung der vertikalen Position des Tubus 7 den Sollwert annimmt und das Gewicht der Tropfen für die Sektionen 6-10 durch Einstellung der Scherenzyklusdauer geregelt wird.

Sowohl gemäß Fig. 5 als auch Fig. 6 könnte statt des externen Taktsignals 72 auch ein von der Antriebssteuerungseinheit 103 erzeugtes Taktsignal vorgesehen sein, das auch anderen Vorrichtungskomponenten, die es benötigen, zur Verfügung gestellt wird.

## Patentansprüche

1. Verfahren zur Erzeugung unterschiedlicher Glastropfenmassen zur Herstellung eines Sortiments einer Anzahl von unterschiedlich schweren Glasgegenständen mittels einer 1.S. (Individual Section)-Glasformmaschine (55), bei dem schmelzflüssiges Glas aus mindestens einem Tropfenauslass (5,5';5") eines Speiserkopfes (3;3') eines Speisers (4;4') strömt und eine zyklisch betätigte Schere (46) die Tropfen (57) abtrennt, wobei die Masse von aufeinander folgenden Tropfen (57) verändert wird, indem der Zeitabstand (77) von Scherenschnitt (74) zu Scherenschnitt (74) variiert wird,
wobei ein vorgegebener Zeitabschnitt (A) des Speiserkopfbetriebs, innerhalb dessen die zugehörige Anzahl von Tropfen (57) zu erzeugen ist, in Abhängigkeit von dem Verhältnis der gewünschten Tropfenmassen in unterschiedliche Zeitabstände (77) von Scherenschnitt (74) zu Scherenschnitt (74) unterteilt wird und
eine Regelung der Tropfenmassen erfolgt, indem ein Massenbezugs-Istwert mit einem Massenbezugs-Sollwert verglichen wird und die Scherenschnitt-Zeitabstände (77) zur Minimierung der Differenz von Ist- und Sollwert angepasst werden und indem zusätzlich eine axiale Verstellung eines Tubus (7) vorgenommen wird.

2. Verfahren nach Anspruch 1,
**dadurch gekennzeichnet, dass** das Verhältnis der unterschiedlichen Zeitabstände (77) von Scherenschnitt (74) zu Scherenschnitt (74) eine Funktion des Verhältnisses der gewünschten Tropfenmassen ist.

3. Verfahren nach Anspruch 2,
**dadurch gekennzeichnet, dass** in die Funktion ein oder mehrere Parameter aus der Gruppe von Tropfendurchmesser, Glaskonsistenz, Produktionsgeschwindigkeit und Glastemperatur eingehen.

4. Verfahren nach einem der vorhergehenden Ansprüche,
**dadurch gekennzeichnet, dass** während des vorgegebenen Zeitabschnitts (A) des Speiserkopfbetriebs Tropfen (57) für einen vollständigen Maschinenzyklus (A) oder mehrere vollständige Maschinenzyklen (A) erzeugt werden.

5. Verfahren nach einem der vorhergehenden Ansprüche,
**dadurch gekennzeichnet, dass** mindestens ein auf- und abbewegbarer Plunger (2,2') in dem Speiserkopf (3,3') angeordnet ist, um das Ausströmen des Glases zu beeinflussen, und der mindestens eine Plunger (2,2') so angesteuert wird, dass für jeden Scherenschnitt (74) innerhalb des vorgegebenen Zeitabschnitts (A) eine gewünschte Phasenlage (83) des Scheren-Überschnitts (75) und des Zeitpunkts (82) der Plunger-Bewegungsumkehr von pressend zu saugend erhalten wird.

6. Verfahren nach Anspruch 5,
**dadurch gekennzeichnet, dass** die Dauer der Bewegung (80) des Plungers (2,2') in Pressrichtung konstant ist, während die Bewegungsdauer (81) des Plungers (2,2') in Saugrichtung an den jeweiligen Zeitabstand (77) von zwei aufeinander folgenden Scherenschnitten (74) angepasst wird, oder umgekehrt.

7. Verfahren nach Anspruch 5,
**dadurch gekennzeichnet, dass** sowohl die Dauer der Bewegung (80) des Plungers (2,2') in Pressrichtung als auch die Bewegungsdauer (81) des Plungers (2,2') in Saugrichtung an den jeweiligen Zeitabstand (77) von zwei aufeinander folgenden Scherenschnitten (74) angepasst werden.

8. Verfahren nach einem der Ansprüche 5 bis 7,
**dadurch gekennzeichnet, dass** eine Stillstandsdauer (85) des Plungers (2,2') bei seiner Bewegungsumkehr von saugend zu pressend an den jeweiligen Zeitabstand (77) von zwei aufeinander folgenden Scherenschnitten (74) angepasst wird.

9. Verfahren nach einem der vorhergehenden Ansprüche,
**dadurch gekennzeichnet, dass** eine Phasenlage (88) der Bewegung (E) eines Tropfenverteilers (49) an die unterschiedlichen Scherenschnitt-Zeitabstände (77) angepasst wird.

10. Verfahren nach einem der vorhergehenden Ansprüche,
**dadurch gekennzeichnet, dass** innerhalb der Regelung zusätzlich eine Veränderung der Bewegung eines in dem Speiserkopf (3,3') angeordneten, auf-und abbewegbaren Plungers (2,2') vorgenommen wird, z.B. eine Veränderung der Geschwindigkeit des Plungers (2,2') in der Abwärts- (80) und/oder Aufwärtsbewegung (81).

11. Vorrichtung (1,1') zur Erzeugung unterschiedlicher Glastropfenmassen bei der Herstellung von Glasgegenständen mittels einer I.S. (Individual Section)-Glasformmaschine (55), aufweisend einen Speiserkopf (3;3') eines Speisers (4;4'), wobei der Speiserkopf (3;3') mindestens einen Tropfenauslass (5,5';5") zum Ausströmen schmelzflüssigen Glases hat, und eine Schere (46) zum Abtrennen der Tropfen (57), welche mittels einer Antriebssteuerungseinheit (103) zyklisch betätigbar ist,
wobei die Antriebssteuerungseinheit (103) zur Variation des Zeitabstands (77) von Scherenschnitt (74) zu Scherenschnitt (74) ausgelegt ist, um die Masse von aufeinander folgenden Tropfen (57) zu verändern, und
die Vorrichtung (1;1') zur Herstellung eines Sortiments einer Anzahl von unterschiedlichen Glasgegenständen vorgesehen ist,
**dadurch gekennzeichnet, dass** in der Antriebssteuerungseinheit (103) abgespeichert sind ein Zeitabschnitt (A) des Speiserkopfbetriebs, innerhalb dessen die zugehörige Anzahl von Tropfen (57) erzeugt wird, und ferner eine Funktion des Verhältnisses der gewünschten Tropfenmassen, die das Verhältnis von unterschiedlichen Zeitabständen (77) von Scherenschnitt (74) zu Scherenschnitt (74) bestimmt, in die der vorgegebene Zeitabschnitt (A) zu unterteilen ist,
dass die Antriebssteuerungseinheit (103) ausgelegt ist, eine Regelung der Tropfenmassen durchzuführen, indem in der Antriebssteuerungseinheit (103) ein Massenbezugs-Sollwert abgespeichert ist, der mit einem Massenbezugs-Istwert verglichen wird, der von einer Istwert-Erfassungseinheit (102) erfasst und über eine Datenleitung (112) der Antriebssteuerungseinheit (103) zugeführt wird, wobei die Antriebssteuerungseinheit (103) die Scherenschnitt-Zeitabstände (77) zur Minimierung der Differenz von Ist- und Sollwert anpasst, und
**dass** die Antriebssteuerungseinheit (103) zur Regelung der Tropfenmassen zusätzlich ausgelegt ist, eine Antriebseinheit (9) eines Tubus (7) zu seiner axialen Verstellung anzusteuern.

12. Vorrichtung (1,1') zur Erzeugung unterschiedlicher Glastropfenmassen bei der Herstellung von Glasgegenständen mittels einer I.S. (Individual Section)-Glasformmaschine (55), aufweisend einen Speiserkopf (3;3') eines Speisers (4;4'), wobei der Speiserkopf (3;3') mindestens einen Tropfenauslass (5,5';5") zum Ausströmen schmelzflüssigen Glases hat, und eine Schere (46) zum Abtrennen der Tropfen (57), welche mittels einer Antriebssteuerungseinheit (103) zyklisch betätigbar ist,
wobei die Antriebssteuerungseinheit (103) zur Variation des Zeitabstands (77) von Scherenschnitt (74) zu Scherenschnitt (74) ausgelegt ist, um die Masse von aufeinander folgenden Tropfen (57) zu verändern, und
die Vorrichtung (1;1') zur Herstellung eines Sortiments einer Anzahl von unterschiedlichen Glasgegenständen vorgesehen ist,
**dadurch gekennzeichnet, dass** in der Antriebssteuerungseinheit (103) abgespeichert sind ein Zeitabschnitt (A) des Speiserkopfbetriebs, innerhalb dessen die zugehörige Anzahl von Tropfen (57) erzeugt wird, und ferner eine Funktion des Verhältnisses der gewünschten Tropfenmassen, die das Verhältnis von unterschiedlichen Zeitabständen (77) von Scherenschnitt (74) zu Scherenschnitt (74) bestimmt, in die der vorgegebene Zeitabschnitt (A) zu unterteilen ist,
dass die Antriebssteuerungseinheit (103) ausgelegt ist, eine Regelung der Tropfenmassen durchzuführen, indem in der Antriebssteuerungseinheit (103) ein Massenbezugs-Sollwert abgespeichert ist, der mit einem Massenbezugs-Istwert verglichen wird, der von einer Istwert-Erfassungseinheit (102) erfasst und über eine Datenleitung (112) der Antriebssteuerungseinheit (103) zugeführt wird, wobei die Antriebssteuerungseinheit (103) die Scherenschnitt-Zeitabstände (77) zur Minimierung der Differenz von Ist- und Sollwert anpasst, und
dass ein Regelungssystem, das so parametriert werden kann, dass nur einzelne Tropfen gleichen Gewichts oder ein einzelner Tropfen oder mindestens eine Gruppe von Tropfen gleichen Gewichts für eine Massenbezugs-Istwert-Bestimmung dienen, ausgelegt ist, zur Regelung der Tropfenmassen eine Antriebseinheit (9) eines Tubus (7) zu seiner axialen Verstellung anzusteuern.

13. Vorrichtung nach Anspruch 12,
**dadurch gekennzeichnet, dass** es sich bei dem Regelungssystem um eine die Massenbezugs-Istwerte erfassende Prozesskontrolleinheit (118) handelt, wobei eine Kommunikationsverbindung (112) zwischen der Antriebssteuerungseinheit (103) und der Prozesskontrolleinheit (118) besteht.

14. Vorrichtung nach einem der beiden Ansprüche 11 bis 13,
**dadurch gekennzeichnet, dass** die Funktion ein oder mehrere Parameter aus der Gruppe von Tropfendurchmesser, Glaskonsistenz, Produktionsgeschwindigkeit und Glastemperatur enthält.

15. Vorrichtung nach einem der Ansprüche 11 bis 14,
**dadurch gekennzeichnet, dass** der vorgegebene Zeitabschnitt (A) so ist, dass während dieses Zeitabschnitts (A) Tropfen für einen vollständigen Maschinenzyklus (A) oder für mehrere vollständige Maschinenzyklen (A) erzeugt werden.

16. Vorrichtung nach einem der Ansprüche 11 bis 15,
**dadurch gekennzeichnet, dass** in dem Speiserkopf (3;3') mindestens ein auf-und abbewegbarer Plunger (2,2') angeordnet ist, um das Ausströmen des Glases zu beeinflussen, und
die Antriebssteuerungseinheit (103) ausgelegt ist, eine Antriebseinheit (104) des Plungers (2,2') so anzusteuern, dass für jeden Scherenschnitt (74) innerhalb des vorgegebenen Zeitabschnitts (A) eine gewünschte Phasenlage (83) des Scheren-Überschnitts (75) und des Zeitpunkts (82) der Plunger-Bewegungsumkehr von pressend zu saugend erhalten wird.

17. Vorrichtung nach Anspruch 16,
**dadurch gekennzeichnet, dass** die Antriebssteuerungseinheit (103) so ausgelegt ist, dass sie die Bewegungsdauer (81) des Plungers (2,2') in Saugrichtung und/oder die Bewegungsdauer (80) des Plungers (2,2') in Pressrichtung und/oder eine Stillstandsdauer (85) des Plungers (2,2') bei seiner Bewegungsumkehr von saugend zu pressend an den jeweiligen Zeitabstand (77) von zwei aufeinanderfolgenden Scherenschnitten (74) anpasst.

18. Vorrichtung nach einem der Ansprüche 11 bis 17,
**dadurch gekennzeichnet, dass** die Antriebssteuerungseinheit (103) ausgelegt ist, eine Phasenlage (88) der Bewegung eines Tropfenverteilers (49) an die unterschiedlichen Scherenschnitt-Zeitabstände (77) anzupassen.

19. Vorrichtung nach einem der Ansprüche 11 bis 18,
**dadurch gekennzeichnet, dass** die Antriebssteuerungseinheit (103) zusätzlich ausgelegt ist, Bewegungsparameter eines in dem Speiserkopf (3,3') angeordneten, auf- und abbewegbaren Plungers (2,2') so zu verändern, dass sich die Tropfenmasse ändert.

## Claims

1. Process for the production of various masses of glass gobs for the manufacture of a range of a number of glass objects of varying weights using an I.S. (Individual Section) glass forming machine (55), where liquid molten glass flows from at least one gob outlet (5, 5'; 5") of a feeder head (3; 3') of a feeder (4; 4') and a cyclically operated pair of shears (46) separates the gobs (57), wherein the mass of successive gobs (57) is altered by varying the time interval (77) from shear cut (74) to shear cut (74),
wherein a predetermined time section (A) of the feeder head operation, within which the relevant number of gobs (57) is to be produced, is divided into different time intervals (77) from shear cut (74) to shear cut (74), depending on the ratio of the desired gob masses and
a control of the gob masses is carried out by comparing a mass-related actual value with a mass-related set value and by adjusting the shear cut time intervals (77) in order to minimize the difference between actual and set values and additionally by axially adjusting a tube (7).

2. Process according to claim 1,
**characterized in that** the ratio of the different time intervals (77) from shear cut (74) to shear cut (74) is a function of the ratio of the desired gob masses.

3. Process according to claim 2,
**characterized in that** one or several parameters from the group of gob diameter, glass consistency, production rate and glass temperature are input into the function.

4. Process according to one of the preceding claims,
**characterized in that** during the predetermined time section (A) of the feeder head operation, gobs (57) are produced for a complete machine cycle (A) or several complete machine cycles (A).

5. Process according to one of the preceding claims,
**characterized in that** at least one plunger (2, 2'), which can move up and down, is arranged in the feeder head (3, 3') in order to influence the outflow of the glass, and the at least one plunger (2, 2') is controlled such that for every shear cut (74) within the predetermined time section (A), a desired phase position (83) of the shear overlap (75) and of the moment (82) of the reversal of the plunger movement from pressing to suction is obtained.

6. Process according to claim 5,
**characterized in that** the duration of the movement (80) of the plunger (2, 2') in the pressing direction is constant, whilst the duration of the movement (81) of the plunger (2, 2') in the direction of suction is adjusted to the relevant time interval (77) of two successive shear cuts (74), or vice versa.

7. Process according to claim 5,
**characterized in that** both the duration of the movement (80) of the plunger (2, 2') in the pressing direction as well as the duration of the movement (81) of the plunger (2, 2') in the direction of suction are adjusted to the relevant time interval (77) of two successive shear cuts (74).

8. Process according to one of claims 5 to 7,
**characterized in that** a duration of standstill (85) of the plunger (2, 2') during its reversal of movement from suction to pressing is adjusted to the relevant time interval (77) of two successive shear cuts (74).

9. Process according to one of the preceding claims,
**characterized in that** a phase position (88) of the movement (E) of a gob distributor (49) is adjusted to the different shear cut time intervals (77).

10. Process according to one of the preceding claims,
**characterized in that** within the control, additionally an alteration to the movement of a plunger (2, 2'), which is disposed in the feeder head (3, 3') and can move up and down, is carried out, e.g. a change to the velocity of the plunger (2, 2') in the downwards (80) and/or upwards (81) movement.

11. Device (1, 1') for the production of various masses of glass gobs during the manufacture of glass objects using an I.S. (Individual Section) glass forming machine (55), comprising a feeder head (3; 3') of a feeder (4; 4'), where the feeder head (3; 3') comprises at least one gob outlet (5, 5'; 5") for the outflow of liquid molten glass, and a pair of shears (46) for the separation of the gobs (57), which can be actuated cyclically by a drive control unit (103),
wherein the drive control unit (103) is designed for the variation of the time interval (77) from shear cut (74) to shear cut (74), in order to alter the mass of successive gobs (57), and
the device (1;1') is provided for the manufacture of a range of a number of different glass objects,
**characterized in that** stored within the drive control unit (103) are a time section (A) of the feeder head operation, within which the relevant number of gobs (57) is produced, and furthermore a function of the ratio of the desired gob masses which determines the ratio of different time intervals (77) from shear cut (74) to shear cut (74), into which the predetermined time section (A) is to be divided,
that the drive control unit (103) is designed to carry out a control of the gob masses, by a mass-related set value being stored in the drive control unit (103), which is compared with a mass-related actual value which is recorded by an actual-value-recording unit (102) and fed via a data line (112) to the drive control unit (103), with the drive control unit (103) adjusting the shear cut time intervals (77) in order to minimize the difference between said actual and set values, and
that the drive control unit (103) for the control of the gob masses is additionally designed to control a drive unit (9) of a tube (7) for the tube's axial adjustment.

12. Device (1, 1') for the production of various masses of glass gobs during the manufacture of glass objects using an I.S. (Individual Section) glass forming machine (55), comprising a feeder head (3; 3') of a feeder (4; 4'), where the feeder head (3; 3') comprises at least one gob outlet (5, 5'; 5") for the outflow of liquid molten glass, and a pair of shears (46) for the separation of the gobs (57), which can be actuated cyclically by a drive control unit (103),
wherein the drive control unit (103) is designed for the variation of the time interval (77) from shear cut (74) to shear cut (74), in order to alter the mass of successive gobs (57), and
the device (1;1') is provided for the manufacture of a range of a number of different glass objects,
**characterized in that** stored within the drive control unit (103) are a time section (A) of the feeder head operation, within which the relevant number of gobs (57) is produced, and furthermore a function of the ratio of the desired gob masses which determines the ratio of different time intervals (77) from shear cut (74) to shear cut (74), into which the predetermined time section (A) is to be divided,
that the drive control unit (103) is designed to carry out a control of the gob masses, by a mass-related set value being stored in the drive control unit (103), which is compared with a mass-related actual value which is recorded by an actual-value-recording unit (102) and fed via a data line (112) to the drive control unit (103), with the drive control unit (103) adjusting the shear cut time intervals (77) in order to minimize the difference between said actual and set values, and
that a control system, which can be parameterized in such a way that only individual gobs of the same weight or an individual gob or at least one group of gobs of the same weight are used to determine the mass-related actual value, is arranged to control a drive unit (9) of a tube (7) for its axial displacement for the control of the gob masses.

13. Device according to claim 12,
**characterized in that** the control system is a process control unit (118) detecting the mass-related actual values, wherein there is a communication link (112) between the drive control unit (103) and the process control unit (118).

14. Device according to one of the two claims 11 to 13 *[sic]*,
**characterized in that** one or several parameters from the group of gob diameter, glass consistency, production rate and glass temperature are considered in the function.

15. Device according to one of claims 11 to 14,
**characterized in that** the predetermined time section (A) is such that gobs are produced for a complete machine cycle (A) or for several complete machine cycles (A) during this time section (A).

16. Device according to one of claims 11 to 15,
**characterized in that** at least one plunger (2; 2'), which can move up and down, is arranged within the feeder head (3; 3'), in order to influence the outflow of the glass, and
the drive control unit (103) being designed such that it controls a drive unit (104) of the plunger (2; 2') in such a way that for every shear cut (74) within the predetermined time section (A) a desired phase position (83) of the shear overlap (75) and of the moment (82) of the reversal of the plunger movement from pressing to suction is obtained.

17. Device according to claim 16,
**characterized in that** the drive control unit (103) is designed so that it adjusts the movement duration (81) of the plunger (2, 2') in the direction of suction and/or the movement duration (80) of the plunger (2; 2') in the pressing direction and/or a duration of standstill (85) of the plunger (2; 2') during its movement reversal from suction to pressing, to the relevant time interval (77) of two successive shear cuts (74).

18. Device according to one of the claims 11 to 17,
**characterized in that** the drive control unit (103) is designed to adjust a phase position (88) of the movement of a gob distributor (49) to the different shear cut time intervals (77).

19. Device according to one of claims 11 to 18,
**characterized in that** the drive control unit (103) is additionally designed such that it alters movement parameters of a plunger (2, 2'), which is arranged in the feeder head (3, 3') and can move up and down, in such a way that the gob mass is altered.

## Revendications

1. Procédé pour la production de paraisons de masse différente en vue de fabriquer un assortiment d'un certain nombre d'objets en verre de poids différent au moyen d'une machine à mouler le verre à sections individuelles (55), dans lequel du verre en fusion sort d'au moins une sortie de paraisons (5, 5' ; 5") d'un distributeur (3 ; 3') d'un système d'alimentation (4 ; 4') et une cisaille (46) actionnée de manière cyclique découpe les paraisons (57), la masse des paraisons (57) successive étant modifiée en faisant varier l'intervalle de temps (77) entre une coupe de la cisaille (74) et la coupe de la cisaille (74) suivante,
dans lequel un intervalle de temps (A) prédéterminé de fonctionnement du distributeur, pendant lequel le nombre correspondant de paraisons (57) doit être produit, est partagé en fonction du rapport des masses de paraison souhaitées en intervalles de temps (77) différents entre une coupe de la cisaille (74) et la coupe de la cisaille (74) suivante, et
les masses des paraisons sont régulées par la comparaison entre une valeur réelle de référence de masse et une consigne de référence de masse et les intervalles de temps (77) entre les coupes de la cisaille sont adaptés de façon à minimiser la différence entre la valeur réelle et la consigne et un déplacement axial d'un tube (7) est en outre effectué.

2. Procédé selon la revendication 1, **caractérisé en ce que** le rapport des différents intervalles de temps (77) entre une coupe de la cisaille (74) et la coupe de la cisaille (74) suivante est fonction du rapport entre les masses de paraison souhaitées.

3. Procédé selon la revendication 2, **caractérisé en ce que** la fonction fait intervenir un ou plusieurs paramètres parmi le diamètre des paraisons, la consistance du verre, la vitesse de production et la température du verre.

4. Procédé selon l'une des revendications précédentes, **caractérisé en ce que** pendant l'intervalle de temps prédéterminé (A) du fonctionnement du distributeur, des paraisons (57) sont produites pour un cycle de machine complet (A) ou plusieurs cycles de machine complets (A).

5. Procédé selon l'une des revendications précédentes, **caractérisé en ce qu'**au moins un plongeur (2, 2') mobile vers le haut et le bas est disposé dans le distributeur (3, 3') pour influer sur l'écoulement du verre, et l'au moins un plongeur (2, 2') est commandé de telle sorte que pour chaque découpe de la cisaille (74), dans l'intervalle de temps prédéterminé (A), une certaine position de phase (83) du croisement de la cisaille (75) et du moment (82) d'inversion du mouvement du plongeur entre pression et aspiration est obtenue.

6. Procédé selon la revendication 5, **caractérisé en ce que** la durée du mouvement (80) du plongeur (2, 2') dans le sens de la pression est constante, tandis que la durée du mouvement (81) du plongeur (2,2') dans le sens de l'aspiration est adaptée à l'intervalle de temps (77) entre deux coupes de la cisaille (74) successives, ou inversement.

7. Procédé selon la revendication 5, **caractérisé en ce que** la durée du mouvement (80) du plongeur (2, 2') dans le sens de la pression aussi bien que la durée du mouvement (81) du plongeur (2, 2') dans le sens de l'aspiration sont adaptées à l'intervalle de temps (77) entre deux coupes de la cisaille (74) successives.

8. Procédé selon l'une des revendications 5 à 7, **caractérisé en ce qu'**une durée d'arrêt (85) du plongeur (2, 2') lors de l'inversion du mouvement de l'aspiration à la pression est adaptée à l'intervalle de temps (77) entre deux coupes de la cisaille (74) successives.

9. Procédé selon l'une des revendications précédentes, **caractérisé en ce qu'**une position de phase (88) du mouvement (E) d'un distributeur de paraisons (49) est adaptée aux différents intervalles de temps (77) entre deux coupes de la cisaille.

10. Procédé selon l'une des revendications précédentes, **caractérisé en ce que** dans la régulation, il est prévu en outre une modification du mouvement d'un plongeur (2, 2') disposé dans le distributeur (3, 3') et pouvant être déplacé vers le haut et le bas, par exemple une modification de la vitesse du plongeur (2, 2') dans son mouvement descendant (80) et/ou ascendant (81).

11. Dispositif (1, 1') pour produire des paraisons de masse différente en vue de fabriquer des objets en verre au moyen d'une machine à mouler le verre I.S. (à sections individuelles) (55), comprenant un distributeur (3, 3') d'un dispositif d'alimentation (4 ; 4'), lequel distributeur (3, 3') possède au moins une sortie de paraisons (5, 5' ; 5") pour la sortie de verre en fusion, et une cisaille (46) destinée à découper les paraisons (57), qui peut être actionnée de manière cyclique au moyen d'une unité de commande de l'entraînement (103),
dans lequel l'unité de commande de l'entraînement (103) est conçue pour faire varier l'intervalle de temps (77) entre une coupe de la cisaille (74) et la coupe de la cisaille (74) suivante pour modifier la masse de paraisons (57) successives, et
le dispositif (1 ; 1') est destiné à fabriquer un assortiment d'un certain nombre d'objets en verre différents,
**caractérisé en ce que** l'unité de commande de l'entraînement (103) mémorise un intervalle de temps (A) du fonctionnement du distributeur pendant lequel le nombre correspondant de paraisons (57) est produit, ainsi qu'une fonction du rapport des masses de paraisons souhaitées déterminant le rapport de différents intervalles de temps (77) entre une coupe de la cisaille (74) et la coupe de la cisaille (74) suivante, dans lesquels l'intervalle de temps prédéterminé (A) doit être partagé,
**en ce que** l'unité de commande de l'entraînement (103) est conçue pour réguler la masse des paraisons par le fait que l'unité de commande de l'entraînement (103) mémorise une consigne de référence de masse qui est comparée avec une valeur réelle de référence de masse qui est détectée par une unité de détection de la valeur réelle (102) et transmise par une ligne de données (112) à l'unité de commande de l'entraînement (103), l'unité de commande de l'entraînement (103) adaptant les .intervalles de temps (77) entre deux coupes de la cisaille de façon à minimiser la différence entre la valeur réelle et la consigne, et
**en ce que** l'unité de commande de l'entraînement (103) pour la régulation des masses des paraisons est conçue en outre pour commander une unité d'entraînement (9) d'un tube (7) en vue du déplacement axial de celui-ci.

12. Dispositif (1, 1') pour produire des paraisons de masse différente en vue de fabriquer des objets en verre au moyen d'une machine à mouler le verre I.S. (à sections individuelles) (55), comprenant un distributeur (3, 3') d'un dispositif d'alimentation (4 ; 4'), lequel distributeur (3, 3') possède au moins une sortie de paraisons (5, 5' ; 5") pour la sortie de verre en fusion, et une cisaille (46) destinée à découper les paraisons (57), qui peut être actionnée de manière cyclique au moyen d'une unité de commande de l'entraînement (103),
dans lequel l'unité de commande de l'entraînement (103) est conçue pour faire varier l'intervalle de temps (77) entre une coupe de la cisaille (74) et la coupe de la cisaille (74) suivante pour modifier la masse de paraisons (57) successives, et
le dispositif (1 ; 1') est destiné à fabriquer un assortiment d'un certain nombre d'objets en verre différents,
**caractérisé en ce que** l'unité de commande de l'entraînement (103) mémorise un intervalle de temps (A) du fonctionnement du distributeur pendant lequel le nombre correspondant de paraisons (57) est produit, ainsi qu'une fonction du rapport des masses de paraisons souhaitées déterminant le rapport de différents intervalles de temps (77) entre une coupe de la cisaille (74) et la coupe de la cisaille (74) suivante dans lesquels l'intervalle de temps prédéterminé (A) doit être divisé,
**en ce que** l'unité de commande de l'entraînement (103) est conçue pour réguler la masse des paraisons par le fait que l'unité de commande de l'entraînement (103) mémorise une consigne de référence de masse qui est comparée avec une valeur réelle de référence de masse détectée par une unité de détection de la valeur réelle (102) et transmise par une ligne de données (112) à l'unité de commande de l'entraînement (103), l'unité de commande de l'entraînement (103) adaptant les intervalles de temps (77) entre deux coupes de la cisaille de façon à minimiser la différence entre la valeur réelle et la consigne, et
**en ce qu'**un système de régulation, pouvant être paramétré de telle façon que seules les paraisons de même poids ou une seule paraison ou au moins un groupe de paraisons de même poids servent à la détermination de la valeur réelle de référence de masse, est conçu pour activer une unité d'entraînement (9) d'un tube (7) en vue du déplacement axial de celui-ci afin de réguler la masse des paraisons.

13. Dispositif selon la revendication 12, **caractérisé en ce que** le système de régulation est une unité de contrôle de process (118) qui détecte les valeurs réelles de référence de masse, tandis qu'il existe une liaison de communication (112) entre l'unité de commande de l'entraînement (103) et l'unité de contrôle de process (118).

14. Dispositif selon l'une des revendications 11 à 13, **caractérisé en ce que** la fonction inclut un ou plusieurs paramètres parmi le diamètre des paraisons, la consistance du verre, la vitesse de production et la température du verre.

15. Dispositif selon l'une des revendications 11 à 14, **caractérisé en ce que** l'intervalle de temps prédéterminé (A) est tel que pendant cet intervalle de temps (A), des paraisons sont produites pour un cycle de machine complet (A) ou plusieurs cycles de machine complets (A).

16. Dispositif selon l'une des revendications 11 à 15, **caractérisé en ce que** le distributeur (3, 3') contient au moins un plongeur (2, 2') pouvant être déplacé vers le haut et le bas pour influer sur l'écoulement du verre, et
l'unité de commande de l'entraînement (103) est conçue pour commander une unité d'entraînement (104) du plongeur (2, 2') de telle sorte que pour chaque découpe de la cisaille (74), dans l'intervalle de temps prédéterminé (A), une position souhaitée de phase (83) du croisement de la cisaille (75) et du moment (82) d'inversion du mouvement du plongeur entre pression et aspiration est obtenue.

17. Dispositif selon la revendication 16, **caractérisé en ce que** l'unité de commande de l'entraînement (103) est conçue de telle sorte que la durée du mouvement (81) du plongeur (2, 2') dans le sens de l'aspiration et/ou la durée du mouvement (80) du plongeur (2, 2') dans le sens de la pression et/ou une durée d'arrêt (85) du plongeur (2, 2') lors de l'inversion de son mouvement de l'aspiration à la pression soient adaptées à l'intervalle de temps (77) entre deux coupes de la cisaille (74) successives.

18. Dispositif selon l'une des revendications 11 à 17, **caractérisé en ce que** l'unité de commande de l'entraînement (103) est conçue de façon à adapter une position de phase (88) du mouvement du distributeur de paraisons (49) aux différents intervalles de temps (77) entre deux coupes de la cisaille.

19. Dispositif selon l'une des revendications 11 à 18, **caractérisé en ce que** l'unité de commande de l'entraînement (103) est conçue en outre pour modifier les paramètres de mouvement d'un plongeur (2, 2') disposé dans le distributeur (3, 3') et pouvant être déplacé vers le haut et le bas, de façon à modifier la masse des paraisons.
